# EUROPEAN PATENT APPLICATION

(11) **EP 1 462 348 A2**
(43) Date of publication of application: **29.09.2004**
(21) Application number: 04075939.1
(22) Date of filing: 26.03.2004
(51) Int. Cl.: B62H 3/08

(54) **Cycle storage system**

(30) Priority: 26.03.2003 NL 1023019
(71) Applicant: Jan Kuipers Staal-en Houtbouwindustrie B.V., 8071 CT Nunspeet (NL)
(72) Inventor: Van Brederode, Martinus, 8071 XD Nunspeet (NL)
(74) Representative: Kupecz, Arpad

(57) **Abstract**

The invention relates to a two-wheeler storage system, comprising a wheel channel, which is movable between a substantially horizontal parking position and a slanting tilted position, wherein the wheel channel has a feed end and a stop end, and in the tilted position the feed end is oriented downward, wherein the wheel channel near the stop end is connected with a spring mechanism aiding the wheel channel's movement from a tilted to a horizontal position. A first end of the spring mechanism is, preferably at a position higher than the wheel channel, connected with a support means mounted on the wheel channel and a second end, at a position lower than the first end, is fastened to a first end of a tumbler, the second end of which tumbler being oriented towards the feed end of the wheel channel.

## Description

The present invention relates to a two-wheeler storage system, comprising a wheel channel, which is movable between a substantially horizontal parking position and a slanting tilted position, wherein the wheel channel has a feed end and a stop end, and in the tilted position the feed end is oriented downward, wherein the wheel channel near the stop end is connected with a spring mechanism aiding the wheel channel's movement from a tilted to a horizontal position.

Such a two-wheeler storage system is known in practise and is used in particular in situations where many two-wheelers, especially bicycles, are parked. The use of such systems may be especially advantageous in public transport facilities, such as train stations. However, the systems mentioned in the preamble take up much room, thereby limiting their application in enclosed spaces as frequently encountered at train stations. Another drawback of the two-wheeler storage system according to the prior art is that the channels in which a bicycle is parked are relatively long. This applies in particular to the parking channels positioned at an elevated level. The known storage systems have two levels for storing two-wheelers. The first level is at ground level. As usual, the wheel channels are vertically staggered at the position where they hold the two-wheeler's front wheel, so that more two-wheelers can be placed with less distance between them. By positioning the wheel channels as described above, the handlebars of two-wheelers parked next to each other will not touch. In addition to said storage spaces at ground level, the known two-wheeler storage systems possess storage spaces above these at a second level. Similarly, at the second level the wheel channels are vertically staggered, at least at the position of the front wheels. In order to be able to park a two-wheeler without much trouble on the second level, at least the wheel channel in which the wheels of the two-wheeler have to be placed are extendable and tiltable. The extended end of the wheel channel will be tilted downward in the direction of the ground. The other end of the wheel channel, the so-called stop end, remains coupled with a guide channel. After positioning the bicycle, the feed end of the tiltable wheel channel can be lifted upward and slid through the guide channel into the parking position. In the parking position, the wheel channel is preferably in horizontal position in order to avoid its dislocation from the parking position owing to gravitational force. A spring mechanism is provided as mentioned above, which aids the movement of the wheel channel from the tilted to the horizontal position, so that less force is required for returning the wheel channel holding the bicycle to the horizontal position.

There is a need for an improved two-wheeler storage system.

It is an object of the invention, therefore, to provide an improved two-wheeler storage system of the kind mentioned in the preamble.

It is a particular object of the invention to provide a two-wheeler storage system that takes up less space while maintaining the number of bicycles that can be stored.

An object of the invention is in particular to provide a two-wheeler storage system, with which a maximum number of two-wheelers can be parked in the smallest possible volume.

In order to obtain at least one of the above mentioned objectives, the invention provides a two-wheeler storage system as mentioned in the preamble, characterised in that a first end of the spring mechanism is connected with a support means mounted on the wheel channel and a second end, at a position lower than the first end, is fastened to a first end of a tumbler, the second end of which tumbler being oriented towards the feed end of the wheel channel. This achieves that a much smaller space is needed beyond the stop end of the wheel channel than in the system according to the prior art. The overall depth, that is to say the distance from the feed end of the system to the stop end is greatly reduced in the system according to the invention. This allows two storage systems according to the invention to be placed back to back, which greatly reduces the distance from the feed end of the one system to the feed end of the other system. Especially with two-wheeler storage systems used in enclosed spaces such as in train stations it is very advantageous that, compared with the present day systems, a larger number of bicycles can be parked in a same space.

According to a further preferred embodiment, the first end of the spring mechanism is at a position higher than the wheel channel connected with a support means mounted on the wheel channel. Such a support means may, for example, be a support means for the front wheel of a bicycle of the kind that is generally a standard attachment on the wheel channel. This prevents that the bicycle after placing can fall over in the wheel channel.

According to a further preferred embodiment, the tumbler is at least partly positioned under the wheel channel. In this way the depth of the system according to the invention can be further limited.

According to still another preferred embodiment, the tumbler is pivotally fastened to the wheel channel at a position between the first and the second end. This makes the construction more compact, allowing the fastening means with which the wheel channel is fastened to the tumbler when the wheel channel is in the tilted position, to be placed up against a stop mounted on the guide channel. This is an improvement of the system, because in addition to a reduction of the overall depth, a very sturdy construction is obtained.

Finally, it is preferred for the tumbler near the second end to be provided with guide means, for example guide wheels, for guiding the movable wheel channel through the guide channel. If the guide channel is made of metal, the system can be improved by manufacturing the guide means, for example, from plastic. This considerably reduces the noise nuisance.

After perusal of the description and viewing the enclosed figures, other advantageous embodiments will occur to the person skilled in the art.

Hereinafter the invention will be further described with reference to a number of figures, which show a preferred embodiment of the invention and which are in no way intended to limit the scope of protection of the invention.

Fig. 1 shows a bicycle storage system according to the invention.

Fig. 2 shows a detailed view of the stop end of a bicycle storage system according to the invention.

Fig. 3 shows a partly cross sectional side view of the stop end of a bicycle storage system according to the invention.

Fig. 4 shows an arrangement of two bicycle storage systems placed up against each other.

Similar components in the figures carry the same reference numbers. Only the components essential to the invention are indicated and numbered.

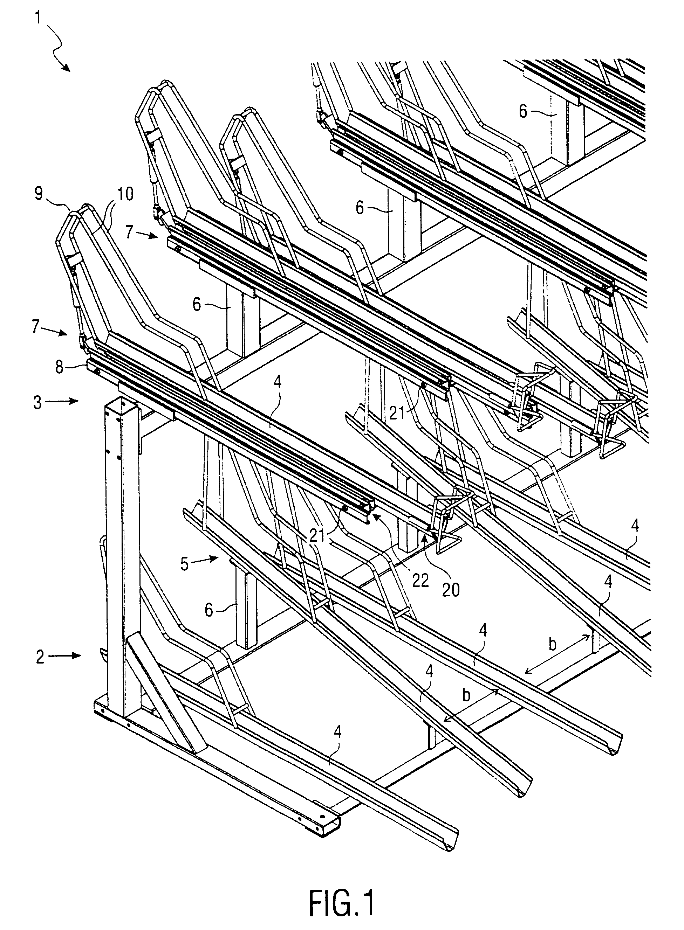

Fig. 1 shows a two-wheeler storage system 1, hereafter referred to as bicycle storage system, with wheel channels mounted at a first position 2 and a second position 3. The wheel channels 4 mounted at the first position 2 are vertically staggered near the positions 5 where a front wheel is placed. In this way the handlebars of bicycles parked next to each other (not shown) will not touch. This allows bicycles to be parked with a small distance b between each other. The vertical element 6 for raising the wheel channel is coupled to an underside of a wheel channel 4.

Means 7 for parking bicycles on the second level 3 are also vertically staggered. Here also vertical elements 6 for raising the wheel channel are provided.

The wheel channel 4 of the parking systems 7 placed on the second level 3 is positioned longitudinally slidable in a guide channel 8. On the second level 3, the wheel channels 4 are provided with supports 9 fastened thereto, between which a front wheel of a two-wheeler can be placed. This will prevent said two-wheeler from falling over when placed with the two wheels in the wheel channel 4. The supports 9 are comprised of two parallel extending bent tubular elements, which however, may have any desirable and appropriate form. This should be such that a wheel of a two-wheeler can be placed between them.

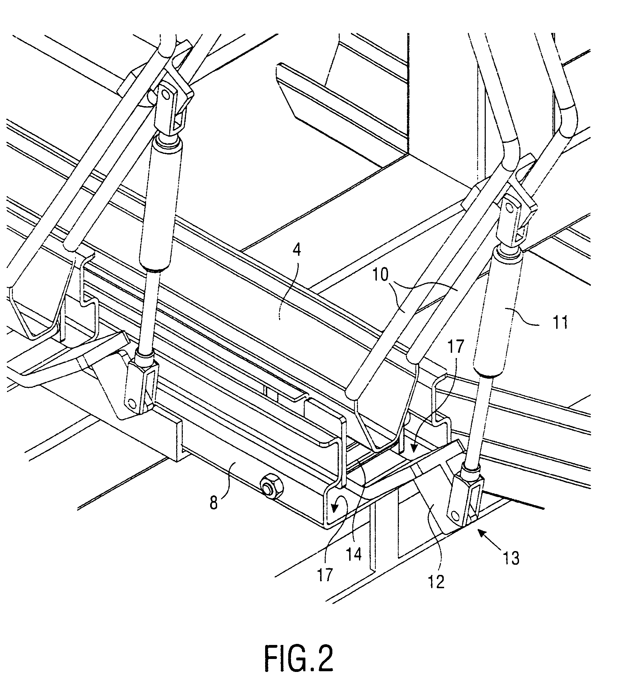

The two tubular elements 10 are interconnected at several positions in order to fix them to each other in a suitable manner. Coupled to this support 9 is a first end of a spring element 11. The other end of this spring element 11 is connected to a first end 13 of a tumbler 12. This is shown clearly in Fig. 2.

Fig. 2 also clearly shows that the tumbler 12 is coupled to a coupling means 14, which in turn is coupled to the wheel channel 4. This coupling should be such as to allow the tumbler 12 to pivot about this element 14. The coupling element 14 therefore also serves as pivoting point 14 for the tumbler.

The coupling element 14 is preferably a hollow cylindrical element whose circumference is connected with the tumbler 12 and through which a, in relation to the coupling element 14, rotatable axis is provided, which in turn is mounted to the wheel channel 4.

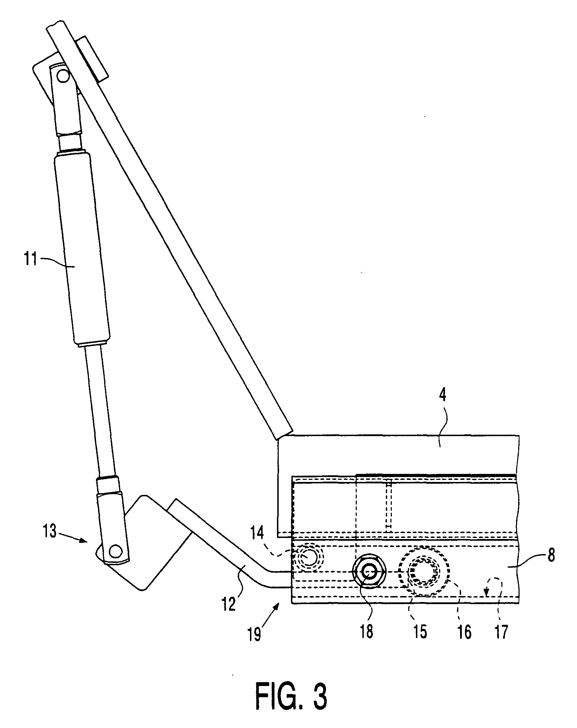

The second end 15 of the tumbler 12 is connected to guide means 16. This is shown in detail in Fig. 3. In the case shown, the guide means 16 are embodied as guide wheels. These wheels are rotatably mounted and run over slide guides 17 in a guide channel 8 surrounding the wheel channel and the tumbler 12. Fig. 3 also shows a stop 18 against which the guide wheels 16 abut when they are moved in the direction of the stop end 19. This limits the maximum range of movement of the wheel channel 4 in the guide channel 8.

When, as shown in Fig. 1, the wheel channel 4 is moved away from the stop end 19 and thus in the direction of the feed end 20, the guide means 16 will abut against a stop 21 at the feed end 22 of the guide channel. When the guide means 16 are arrested at the stop 21 near the feed end 22 of the guide channel 8, the feed end 20 of the wheel channel can be moved downward. This will cause the tumbler 12 to tilt about a tilting point 14. The spring element 11 will then become compressed counter to its spring force. Subsequently a bicycle (not shown) can be placed in the wheel channel, wherein the front wheel is initially positioned in the wheel channel and moved in the direction of the stop end 19. The rear wheel will then be located near the feed end 20 of the wheel channel. Next the wheel channel 4 holding the two-wheeler can be moved into a horizontal position with the cooperation of the spring element 11. When the wheel channel 4 is brought into a horizontal position it can be moved to the parking position (as shown in Fig. 1).

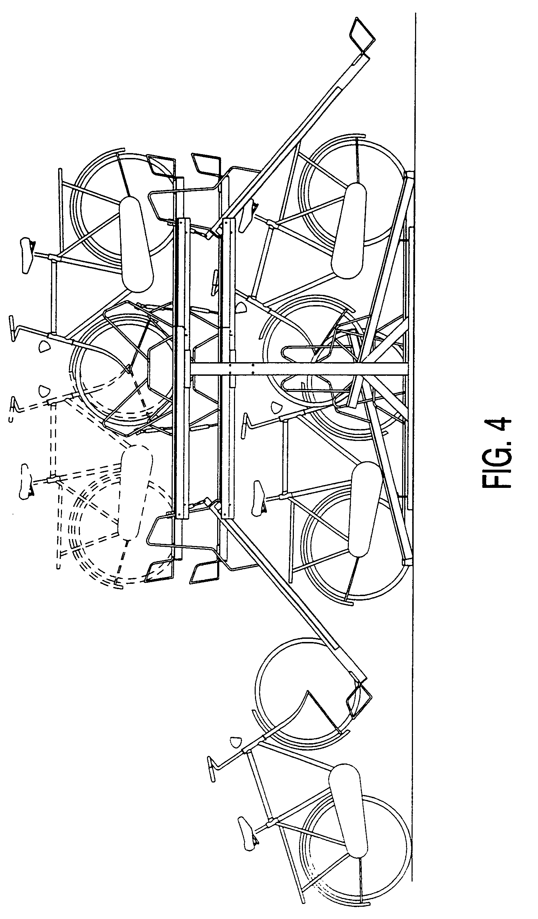

Clearly, the bicycle storage system according to the invention offers considerable advantages. Because the tumbler is partly located under the wheel channel 4, the depth of the device, that is to say the distance from the feed end 20 of the wheel channel to the most distal point of the storage system near the stop end 19, is strongly reduced. The most distal point will generally be formed by the tubular elements 10. In the two-wheeler storage system according to the prior art the most distal part was the guide channel 8, jutting out beyond the tubular elements 10. This resulted in the problem that the guide channel came into contact with bicycles parked in a similar storage system behind the illustrated storage system 1. The distance between two bicycle storage systems 1 positioned with the stop ends facing each other thereby increased to such an extent that said systems need more space than desirable. Such an assembly is shown in Fig. 4. The system according to the invention allows two storage systems to be positioned with their stop ends abutting to each other, so that the total depth, that is to say the distance from the feed end of the first storage system to the feed end of the second storage system, is a mere 290 cm. Even so, it is possible to properly park two-wheelers of all sizes.

A further advantage of the system according to the invention is that the bicycles positioned in the wheel channels on the first level 2 do not touch the wheel channel 4 of the second level 3 when the same is lowered.

The coupling element 14 is preferably positioned virtually abutting against lateral elements such that when tilting the wheel channel 4, the same is only exposed to radial forces. This reduces the load on the coupling element considerably.

In the system according to the invention, the angle of the wheel channel is limited only by the bearings of the tumbler and by the pivoting point. This makes it possible to accurately adjust the tilt angle of the wheel channel 4.

As shown in the figures, the guide channel is formed by a mirror image Z-section, with the guide means 16 moving over slide guides 17 formed by the guide channel 8. This provides a very stable construction. It is achieved mainly owing to the guide means being slid into the guide channel 8 at the lowest positions.

The invention is not limited to the embodiments shown in the figures and described in the detailed specification. It is limited only by the appended claims. Moreover, further changes and modifications, all of which are deemed to be within the protective scope of the invention, will be obvious to the person skilled in the art.

## Claims

1. A two-wheeler storage system, comprising a wheel channel, which is movable between a substantially horizontal parking position and a slanting tilted position, wherein the wheel channel has a feed end and a stop end, and in the tilted position the feed end is oriented downward, wherein the wheel channel near the stop end is connected with a spring mechanism aiding the wheel channel's movement from a tilted to a horizontal position, **characterised in that** a first end of the spring mechanism is connected with a support means mounted on the wheel channel and a second end, at a position lower than the first end, is fastened to a first end of a tumbler, the second end of which tumbler being oriented towards the feed end of the wheel channel.

2. A two-wheeler storage system according to claim 1, **characterised in that** the first end of the spring mechanism is at a position higher than the wheel channel connected with a support means mounted on the wheel channel.

3. A two-wheeler storage system according to any of claim 1 or 2, **characterised in that** the tumbler is at least partly positioned under the wheel channel.

4. A two-wheeler storage system according to any of claims 1 to 3, **characterised in that** the tumbler is pivotally fastened to the wheel channel at a position between the first and the second end.

5. A two-wheeler storage system according to any of claims 1 to 4, **characterised in that** the tumbler near the second end is provided with guide means, for guiding the movable wheel channel through the guide channel.

6. A two-wheeler storage system according to any of claims 1 to 5, **characterised in that** the fastening means with which the wheel channel is pivotally fastened to the tumbler in the tilted position abuts against a stop mounted on the guide channel.
